# EUROPEAN PATENT APPLICATION

(11) **EP 2 996 055 A1**
(43) Date of publication of application: **16.03.2016**
(21) Application number: 15159751.5
(22) Date of filing: 18.03.2015
(51) Int. Cl.: G06F 17/50, G06T 17/00

(54) **METHOD FOR AUTOMATICALLY PRESENTING PAVEMENT SCHEME OF DECORATION PILES OR MARBLES**

(30) Priority: 09.09.2014 CN 201410455808
(71) Applicant: Beijing Eryiju Technology Co., Ltd, Dongdan Beijing (CN)
(72) Inventor: Yao, Jin, Dongdan Beijing (CN); Liu, Rujia, Dongdan Beijing (CN); He, Decai, Dongdan Beijing (CN); Bai, Kun, Dongdan Beijing (CN); Li, Hao, Dongdan Beijing (CN); Wang, Bo, Dongdan Beijing (CN); Zhang, Xingnan, Dongdan Beijing (CN); Fang, Xin, Dongdan Beijing (CN)
(74) Representative: Berkkam, Ayfer

(57) **Abstract**

The present invention discloses a method for automatically presenting a pavement scheme of decoration piles or marbles, including: step 1), recording tiles, pictures of marbles, mosaic modelings, patterns of cross banding line frames, patterns of modeling tiles of each brand into a database of the brand in a QEYJ software according to a QEYJ rule; step 2), transforming all kinds of designs of tiles or marbles and pavement manners into computer description language and formulas of functions; step 3), in a 3D stereo scene, by calling the computer description language and formulas of functions, re-transforming various tiles, pictures of marbles, mosaic modelings, patterns of cross banding line frames, patterns of modeling tiles by calculation, to present them in the 3D scene of a region to be paved; and tep 4), by recording and transmitting, the pavement pattern produced in the 3D stereo scene may be calculated, transformed, and re-presented in other scenes. The present invention is particularly suitable for quickly presenting paving effects to consumers and owners in sales industry for tiles, marbles and the like, and has a significant promotion value.

## Description

### TECHNICAL FIELD

The present invention relates to the field of decoration design, and more particularly relates to a method for automatically presenting a pavement scheme of decoration piles or marbles.

### BACKGROUND

Currently, in the present tiles or marbles sales industry, most sellers present decoration effects to owners by showing them with laid drawings or effect drawings produced through CAD or 3Dmax. Wherein, through CAD, only drawings with black and white lines may be presented to the owners, the decoration effects cannot be intuitively presented to the user. Even worse, those who are not familiar with CAD are totally confused and cannot understand the drawings at all. This inevitably affects performance of the sellers. For 3Dmax, although it may bring about excellent vision effects for the users, its production time is long and the cost is high. For this reason, the sellers rarely produce 3Dmax drawings for the owners. It is difficult for the owners to view the pavement effects of tiles or marbles in their house. Therefore, for the tiles or marbles sales industry, a method is needed which is capable of quickly and easily presenting to the owner the effect of the tiles or marbles paved to the house of the owner.

### SUMMARY

Based on the above technical problems, the present invention provides a method for automatically presenting a pavement scheme of decoration piles or marbles. The method is not like the conventional CAD software which produces diagrams with black and white lines which is insufficiently intuitive and is hard to be understood, and which has long production period and high cost. The method is particularly desirable for the current tiles and marbles sales industry.

The technical solutions provided by the present invention are as follows.

A method for automatically presenting a pavement scheme of decoration piles or marbles, including:

step 1), recording tiles, pictures of marbles, mosaic modelings, patterns of cross banding line frames, patterns of modeling tiles of each brand into a database of the brand in a QEYJ software according to a QEYJ rule;

step 2), transforming all kinds of designs of tiles or marbles and pavement manners into computer description language and formulas of functions;

step 3), in a 3D stereo scene, by calling the computer description language and formulas of functions, re-transforming various tiles, pictures of marbles, mosaic modelings, patterns of cross banding line frames, patterns of modeling tiles by calculation, to present them in the 3D scene of a region to be paved; and

step 4), by recording and transmitting, the pavement pattern produced in the 3D stereo scene may be calculated, transformed, and re-presented in other scenes.

Preferably, in the method, the computer description language and formulas of functions in the system are called, and by calculation, tiles or marbles in a selected region are chamfered, then a calculation result is transformed into an image of the chamfered tiles or marbles, and the image is presented in the region.

Preferably, in the method, the computer description language and formulas of functions in the system are called, and by calculation, tiles or marbles in a selected region are grooved, that is, a groove structure is formed at a predetermined position of each tile or marble, then a calculation result is transformed into an image of the grooved tiles or marbles, and the image is presented in the region, wherein, the predetermined position of each tile or marble is selected in a selection module for grooving manners, including a unilateral grooving option, a bilateral grooving option and an equal divisional grooving option.

Preferably, in the method, the computer description language and formulas of functions in the system are called, and by calculation, cross banding line frames are added into a selected region, that is, cross banding lines are added in combination at a predetermined position in the selected region, then a calculation result is transformed into an image of combination of cross banding line frames, and the image is presented in the region, wherein, the combination of cross banding line frames is selected in a selection module for cross banding line frames, including a plurality of options of a first pattern, a second pattern, a third pattern and a fourth pattern.

Preferably, in the method, the computer description language and formulas of functions in the system are called, and by calculation, mosaic tiles are added into a selected region, that is, tiles or marbles are added in mosaic forms at a predetermined position in the selected region, then a calculation result is transformed into an image of combination of a mosaic, and the image is presented in the region, wherein, the mosaic pattern is selected in a selection module for mosaic patterns, and each exploded figure in a mosaic pattern may be selected and replaced by a user operating tiles or marbles options.

Preferably, in the method, the computer description language and formulas of functions in the system are called, and by calculation, boundary lines are added into a selected region, that is, tiles are added around a position of a wall body in the selected region, then a calculation result is transformed into an image of tiles or marbles added in the region as boundary lines, and the image is presented in the region, wherein, number of the boundary lines may be one, two, three or more, and each boundary line is paved around the position of the wall body or a sanitary appliance and then displayed in the region.

Preferably, in the method, the computer description language and formulas of functions in the system are called, and by calculation, tiles joints between tiles or between marbles in a selected region are performed with joint process, the joint process includes: selection for a color in a selection module for joint colors, and selection for a width in a selection module for joint widths, then a calculation result is transformed into an image of tiles or marbles with changes in joints, and the image is presented in the region.

Preferably, in the method, he computer description language and formulas of functions in the system are called, and by calculation, tiles or marbles in a selected region are paved by rolling, including: at least two texture rotation angles for a type of tiles or marbles are selected from tiles options, then a calculation result is transformed into an image of combination of tiles or marbles, and the image is presented in the region.

Preferably, in the method, the computer description language and formulas of functions in the system are called, and by calculation, tiles or marbles in a selected region are paved in combination, including: at least two tiles are selected simultaneously from tiles or marbles options, then a calculation result is transformed into an image of combination of tiles or marbles, and the image is presented in the region, wherein, a predetermined pavement rule is selected by a user in a selection module for pavement of combined tiles.

Preferably, in the method, the computer description language and formulas of functions in the system are called, and by calculation, tiles or marbles in a selected region are paved as modeling tiles, that is, the tiles are added at a predetermined position in the selected region in a form of modeling tiles, then a calculation result is transformed into an image of modeling tiles, and the image is presented in the region, wherein, the modeling tiles are selected in a selection module for modeling tiles. There are many types of modeling patterns in the selection module for modeling tiles, and each exploded figure in a modeling tile may be selected and replaced by a user operating tiles or marbles options, and a size, number of a modeling tile may also be performed with an equal division operation.

Preferably, in the method, the computer description language and formulas of functions in the system are called, and by calculation, a user performs a region separating operation in a selected region, and the system will record information on the separation, and for each separated region, allow a user to select in tiles or marbles options in the combined tiles pavement module or in the modeling tiles pavement module, and presents the selection by a user in the separated region of the pattern.

Preferably, in the method, the computer description language and formulas of functions in the system are called, and by calculation, a selected 3D model is paved with modeling tiles, that is, tiles are added at a predetermined position in the selected region in a form of modeling tiles, then a calculation result is transformed into an image of modeling tiles on the selected model, and the image is presented on the model, wherein, the modeling tiles are selected in a selection module for modeling tiles, and each exploded figure in a modeling tile may be selected and replaced by a user operating tiles or marbles options.

Preferably, in the method, the computer description language and formulas of functions in the system are called, and by calculation, paving manners of tiles or marbles around selected mosaic tiles, door or windows are adjusted, that is, paving positions of tiles around the selected mosaic tiles, doors or windows are re-adjusted, then a calculation result is transformed into an image of paved tiles with the position re-adjusted, and the image is presented in the region, wherein, pavement modeling patterns may be divided into 10 types, and a user may freely select a pavement modeling pattern to pave and present according to his actual needs.

Preferably, in the method, selection results are recorded in the tiles options by a user, and a consumption amount and cost list of each type of tiles is generated on the interface, and by transmtting, the list is transformed, calculated and re-presented in other scenes.

The method for automatically presenting a pavement scheme of decoration piles or marbles effectively solves the bottleneck problem encountered by the conventional CAD software and 3Dmax software in the sales industry, by presenting a tiles pavement effect in various manners in a 3D scene of a region to be paved, allowing the consumers and owners to view the piles pavement effect intuitively, which is fast and convenient, and brings about excellent vision experience for the consumers and owners, therefore it has a significant promotion value.

### BRIEF DESCRIPTION OF THE DRAWINGS

Figure 1 is a schematic view of an interface of chamfering according to the method for automatically presenting a pavement scheme of decoration piles or marbles of the present invention;
Figure 2 is a schematic view of an interface of unilater grooving according to the method for automatically presenting a pavement scheme of decoration piles or marbles of the present invention;
Figure 3 is a schematic view of an interface of equal divisional grooving according to the method for automatically presenting a pavement scheme of decoration piles or marbles of the present invention;
Figure 4 is a schematic view of an interface of processing cross banding lines according to the method for automatically presenting a pavement scheme of decoration piles or marbles of the present invention;
Figure 5 is a schematic view of an interface of processing four types of cross banding lines according to the method for automatically presenting a pavement scheme of decoration piles or marbles of the present invention;
Figure 6 is a schematic view of an interface of mosiac processing according to the method for automatically presenting a pavement scheme of decoration piles or marbles of the present invention;
Figure 7 is a schematic view of an interface of processing boundary lines according to the method for automatically presenting a pavement scheme of decoration piles or marbles of the present invention;
Figure 8 is a schematic view of an interface of processing tiles joints according to the method for automatically presenting a pavement scheme of decoration piles or marbles of the present invention;
Figure 9 is a schematic view of an interface of paving by rolling according to the method for automatically presenting a pavement scheme of decoration piles or marbles of the present invention;
Figure 10 is a schematic view of an interface of paving in combination according to the method for automatically presenting a pavement scheme of decoration piles or marbles of the present invention;
Figure 11 is a schematic view of an interface of paving modeling tiles according to the method for automatically presenting a pavement scheme of decoration piles or marbles of the present invention;
Figure 12 is a schematic view of an interface of chamfer equal divisional paving modeling tiles according to the method for automatically presenting a pavement scheme of decoration piles or marbles of the present invention;
Figure 13 is a schematic view of an interface of paving various types of modeling tiles according to the method for automatically presenting a pavement scheme of decoration piles or marbles of the present invention;
Figure 14 is a schematic view of an interface of processing region separation lines according to the method for automatically presenting a pavement scheme of decoration piles or marbles of the present invention;
Figure 15 is a schematic view of an interface of paving modeling tiles to a 3D model of a bathtub according to the method for automatically presenting a pavement scheme of decoration piles or marbles of the present invention;
Figure 16 is a schematic view of an interface of paving modeling tiles to a 3D model of a background wall for a television according to the method for automatically presenting a pavement scheme of decoration piles or marbles of the present invention;
Figure 17 is a schematic view of an interface of paving tiles around a mosaic pattern according to the method for automatically presenting a pavement scheme of decoration piles or marbles of the present invention;
Figure 18 is a schematic view of an interface of paving tiles around a door according to the method for automatically presenting a pavement scheme of decoration piles or marbles of the present invention; and
Figure 19 is a schematic view of an interface of paving tiles around a window according to the method for automatically presenting a pavement scheme of decoration piles or marbles of the present invention.

### DETAILED DESCRIPTION

Hereinafter, the present invention is further described in detail in conjunction with accompany drawings, to enable those skilled in the art to practice the invention with reference to the contents of the description.

A method for automatically presenting a pavement scheme of decoration piles or marbles is provided by the present invention, including: step 1), tiles, pictures of marbles, mosaic modelings, patterns of cross banding line frames, patterns of modeling tiles of each brand are recorded into a database of the brand in a QEYJ software according to a QEYJ rule; step 2), all kinds of designs of tiles or marbles and pavement manners are transformed into computer description language and formulas of functions; step 3), in a 3D stereo scene, by calling the computer description language and formulas of functions, various tiles, pictures of marbles, mosaic modelings, patterns of cross banding line frames, patterns of modeling tiles are re-transformed by calculation, to be presented in the 3D scene of a region to be paved; and step 4), by recording and transmitting, the pavement pattern produced in the 3D stereo scene may be calculated, transformed, and re-presented in other scenes.

Based on the above method, specific embodiments are given according to the present invention, as follows.

### A first embodiment: chamfering

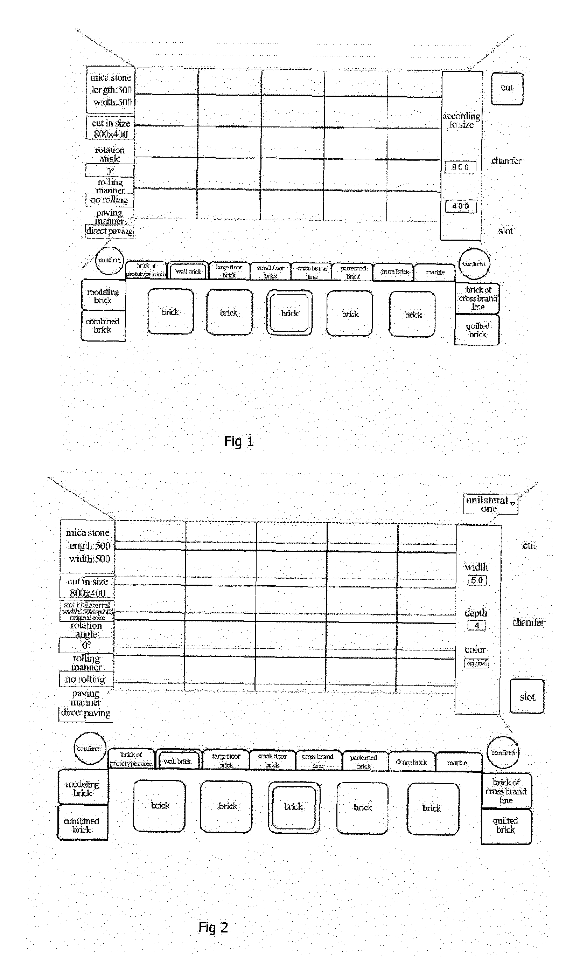

Referring to Figure 1, in this method, the computer description language and formulas of functions in the system are called, and by calculation, tiles or marbles in a selected region are chamfered, then a calculation result is transformed into an image of the chamfered tiles or marbles, and the image is presented in the region.

Here, chamfering includes: upper chamfering, lower chamfering, left chamfering, right chamfering, left and right chamfering, upper and lower, left and right chamfering. After a chamfering manner is determined by the user, the software will quickly and immediately present the calculation result in a scene by calculation.

### A second embodiment: grooving

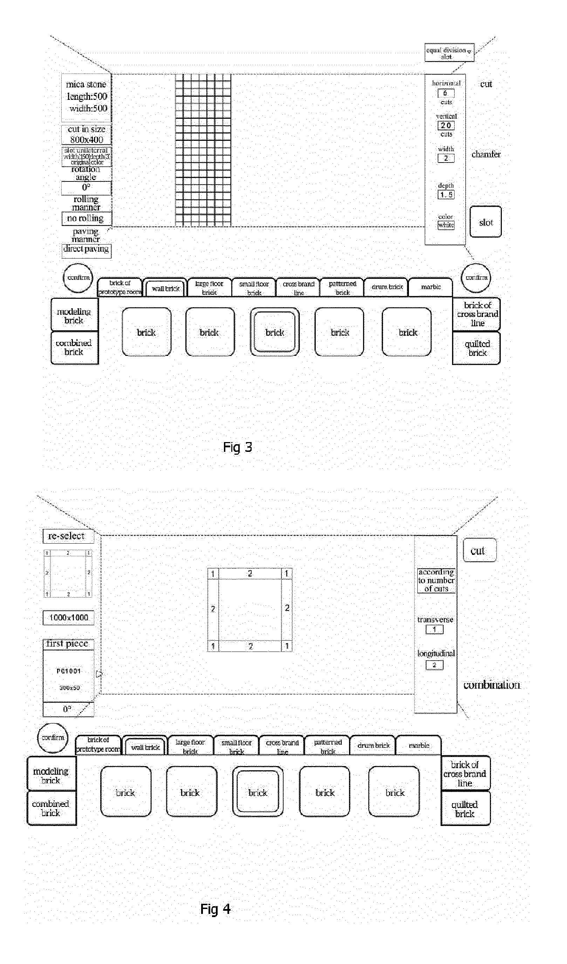

Referring to Figures 2 and 3, in this method, the computer description language and formulas of functions in the system are called, and by calculation, tiles or marbles in a selected region are grooved, that is, a groove structure is formed at a predetermined position of each tile or marble, then a calculation result is transformed into an image of the grooved tiles or marbles, and the image is presented in the region. Wherein, the predetermined position of each tile or marble is selected in a selection module for grooving manners, including a unilateral grooving option, a bilateral grooving option and an equal divisional grooving option.

Here, number of groovings may be selected for both unilateral grooving and bilateral grooving, and in the grooving manners including the equal divisional grooving, a width and a depth of the grooving may also be selected. Similarly, after a grooving manner is determined by the user, the software will quickly and immediately present the calculation result in a scene by calculation.

### A third embodiment: adding cross banding line tiles

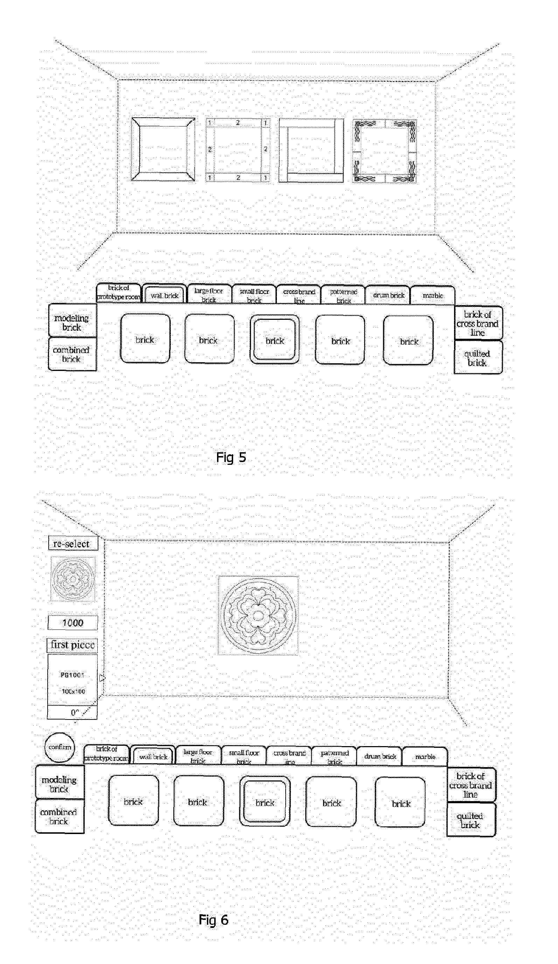

Referring to Figures 4 and 5, in this method, the computer description language and formulas of functions in the system are called, and by calculation, cross banding line frames are added into a selected region, that is, the cross banding lines are added in combination at a predetermined position in the selected region, then a calculation result is transformed into an image of combination of cross banding line frames, and the image is presented in the region. Wherein, the combination of cross banding line frames is selected in a selection module for cross banding line frames, including a plurality of options of a first pattern, a second pattern, a third pattern and a fourth pattern.

That is, when he desires to process cross banding line tiles, the user only needs to select a type of the cross banding line from a tab of cross banding line usage in the database. Also, in a subordinate menu of the types of cross banding lines, many kinds of patterns of cross banding line tiles are provided for the user to select, including differing patterns and different figures. After a pattern of cross banding line frame is determined through the selection module for cross banding line tiles, the software will quickly and immediately present the calculation result in a scene by calculation.

### A fourth embodiment: adding mosaic tiles

Referring to Figure 6, in this method, the computer description language and formulas of functions in the system are called, and by calculation, mosaic tiles are added into a selected region, that is, tiles or marbles are added in mosaic forms at a predetermined position in the selected region, then a calculation result is transformed into an image of combination of a mosaic, and the image is presented in the region.

Wherein, the mosaic pattern is selected in a selection module for mosaic patterns, and each exploded figure in a mosaic pattern may be selected and replaced by the user operating tiles or marbles options.

### A fifth embodiment: adding boundary lines

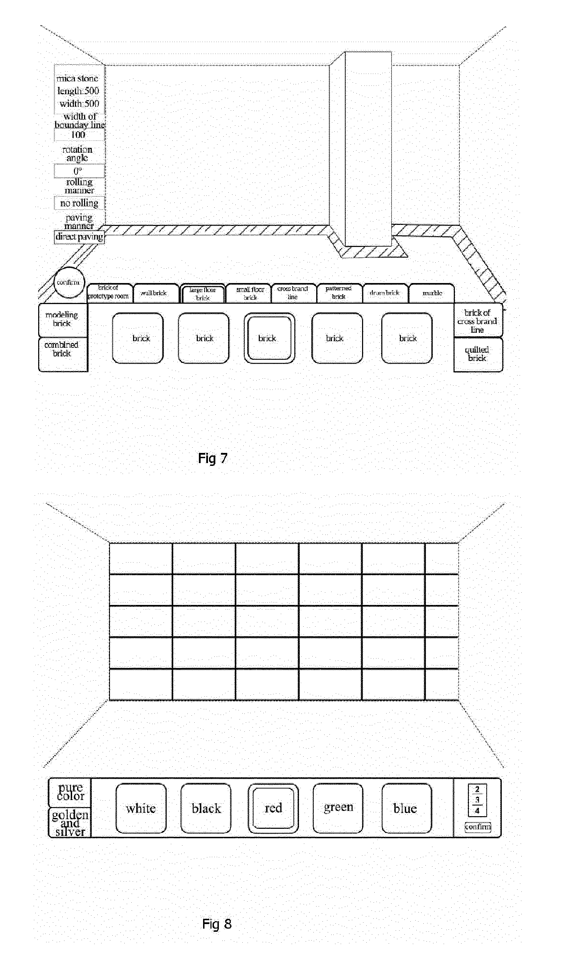

Referring to Figure 7, in this method, the computer description language and formulas of functions in the system are called, and by calculation, boundary lines are added into a selected region, that is, tiles are added around a position of a wall body in the selected region, then a calculation result is transformed into an image of tiles or marbles added in the region as boundary lines, and the image is presented in the region.

Wherein, number of the boundary lines may be one, two, three, etc., and each boundary line is paved around the position of the wall body or a sanitary appliance and then displayed in the region.

### A sixth embodiment: processing tiles joints

Referring to Figure 8, in this method, the computer description language and formulas of functions in the system are called, and by calculation, tiles joints between tiles or between marbles in a selected region are performed with joint process, the joint process includes: selection for a color in a selection module for joint colors, and selection for a width in a selection module for joint widths, then a calculation result is transformed into an image of tiles or marbles with changes in joints, and the image is presented in the region.

Here, it is easy to be appreciated that, the user may process joints between tiles in the selected region, he may select a color, or may select a wide width or a narrow width for the width of the joints. After the tile joints are modified, paved area of the tiles will be changed with it. These changes will be calculated by the software, and the calculation result will be quickly and immediately presented in a scene.

### A seventh embodiment: pavement by rolling

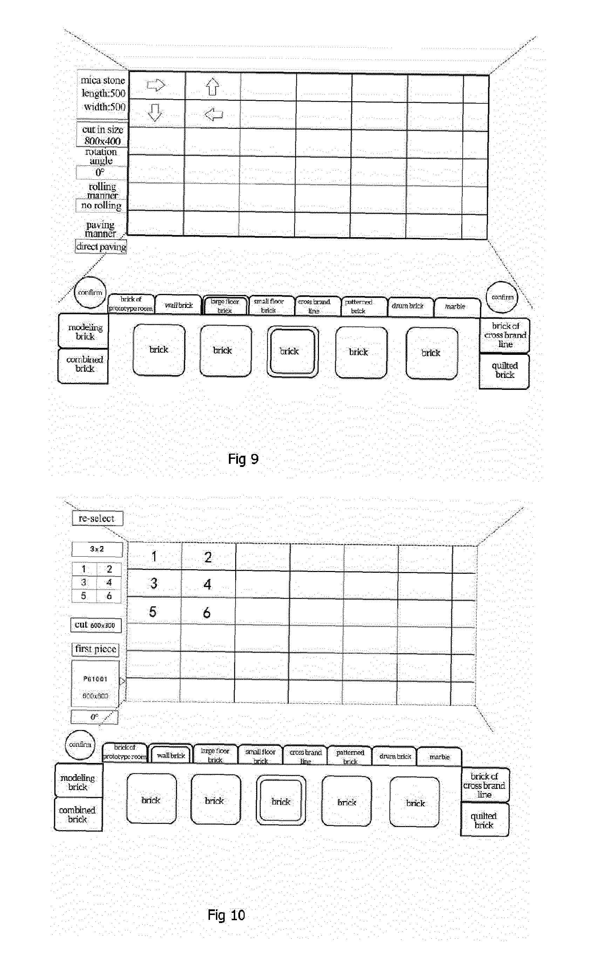

Referring to Figure 9, in this method, the computer description language and formulas of functions in the system are called, and by calculation, tiles or marbles in a selected region are paved by rolling, including: at least two texture rotation angles for a type of tiles or marbles are selected from tiles options, then a calculation result is transformed into an image of combination of tiles or marbles, and the image is presented in the region.

Wherein, the rolling manners include four manners of transversely rolling, vertically rolling, full rolling and no rolling. The user may select any one of the manners to adjust the pavement effect of the tiles or marbles.

### An eighth embodiment: paving in combination

Referring to Figure 10, in this method, the computer description language and formulas of functions in the system are called, and by calculation, tiles or marbles in a selected region are paved in combination, including: at least two tiles are selected simultaneously from tiles or marbles options, then a calculation result is transformed into an image of combination of tiles or marbles, and the image is presented in the region. Wherein, the predetermined pavement rule is selected by the user in a selection module for pavement of combined tiles.

In order to meet the aesthetic requirements of different users, the present invention provides to users with schemes of pavement of combined tiles or marbles, that is, allowing the user to alternatively pave at least two types of tiles in the selected region. The alternative paving rules are recorded in a combined tiles pavement module in a form of computer language, including but not limited to: rules of ordinary paving, inclined pavement with two colors, inclined pavement with three colors and free selection in number of transverse or vertical combinations, and the like.

### A ninth embodiment: paving modeling tiles

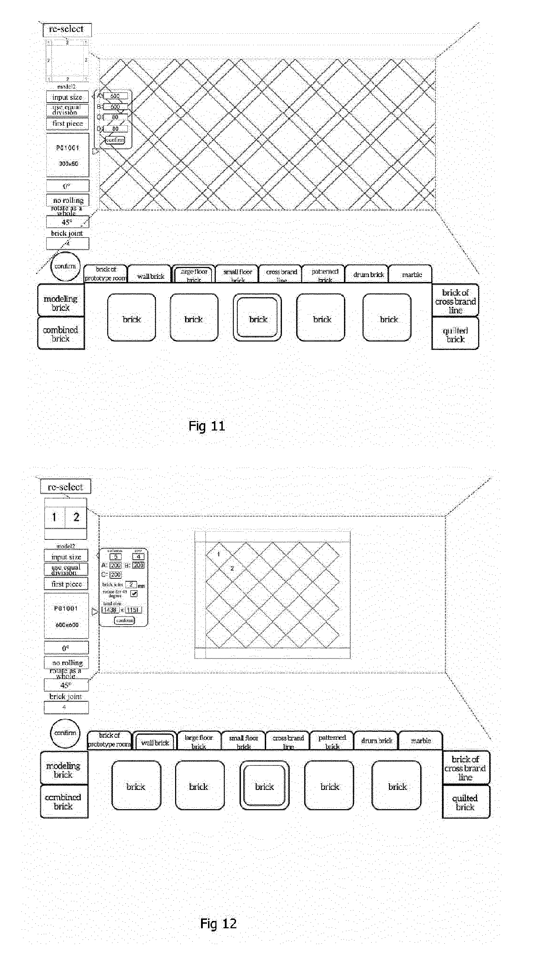

Referring to Figures 11, 12 and 13, in this method, the computer description language and formulas of functions in the system are called, and by calculation, tiles or marbles in a selected region are paved as modeling tiles, that is, the tiles are added at a predetermined position in the selected region in a form of modeling tiles, then a calculation result is transformed into an image of modeling tiles, and the image is presented in the region.

Wherein, the modeling tiles are selected in a selection module for modeling tiles. There are many types of modeling patterns in the selection module for modeling tiles, and each exploded figure in a modeling tile may be selected and replaced by the user operating tiles or marbles options, and a size, number of a modeling tile may also be performed with an equal division operation.

### A tenth embodiment: separating operation

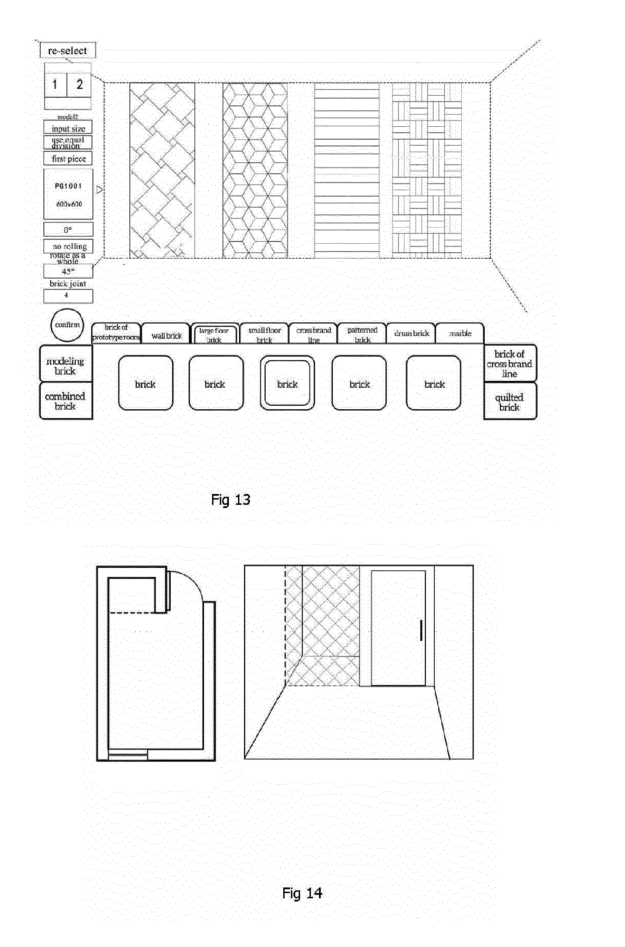

Referring to Figure 14, in this method, the computer description language and formulas of functions in the system are called, and by calculation, the user performs a region separating operation in a selected region, and the system may record information on the separation, and for each separated region, allow the user to select in tiles or marbles options in the combined tiles pavement module or in the modeling tiles pavement module, and presents the selection by the user in the separated region of the pattern.

Here, the above mentioned separating operation is performed by drawing a separating line in a layout plane of a house, after it is drawn in the plane, the system will record information on separation of region and immediately present the separated regions quickly in a stereo interface.

### An eleventh embodiment: paving modeling tiles for a 3D model

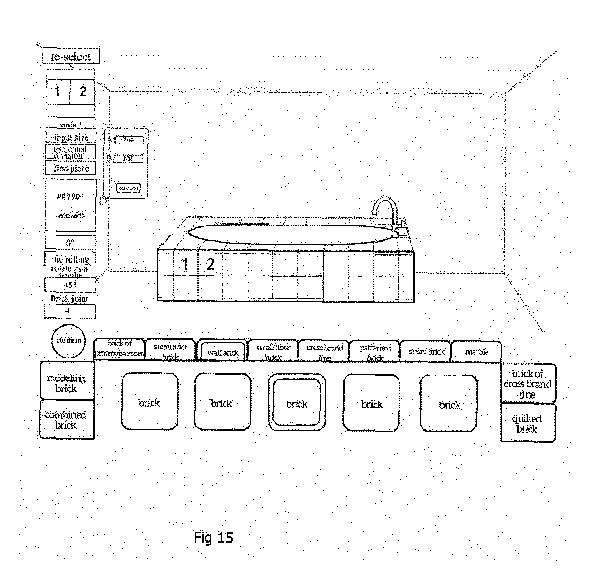

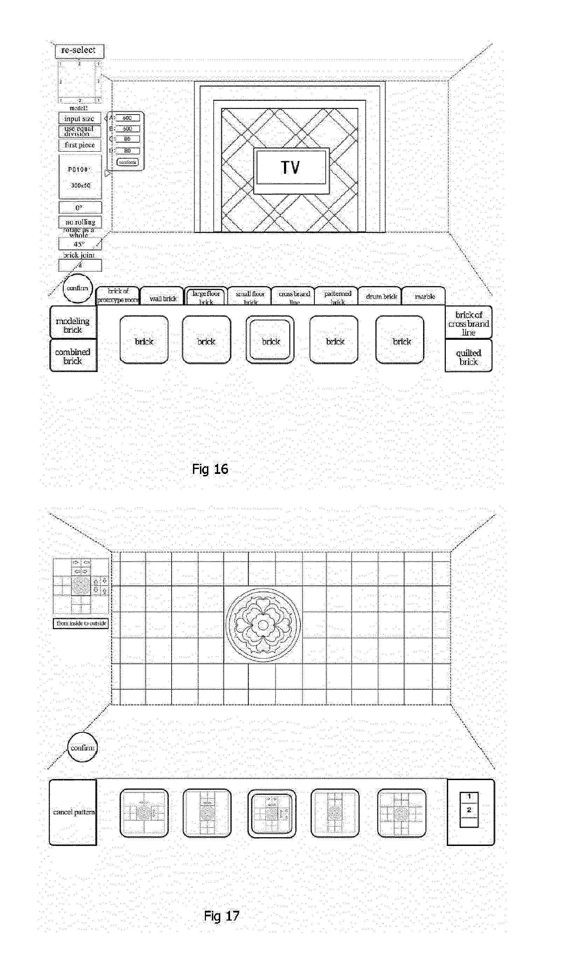

Referring to Figures 15 and 16, in this method, the computer description language and formulas of functions in the system are called, and by calculation, a selected 3D model is paved with modeling tiles, that is, tiles are added at a predetermined position in the selected region in a form of modeling tiles, then a calculation result is transformed into an image of modeling tiles on the selected model, and the image is presented on the model.

Wherein, the modeling tiles are selected in a selection module for modeling tiles, and each exploded figure in a modeling tile may be selected and replaced by the user operating tiles or marbles options.

A twelfth embodiment: paving tiles around mosaic tiles, doors or windows

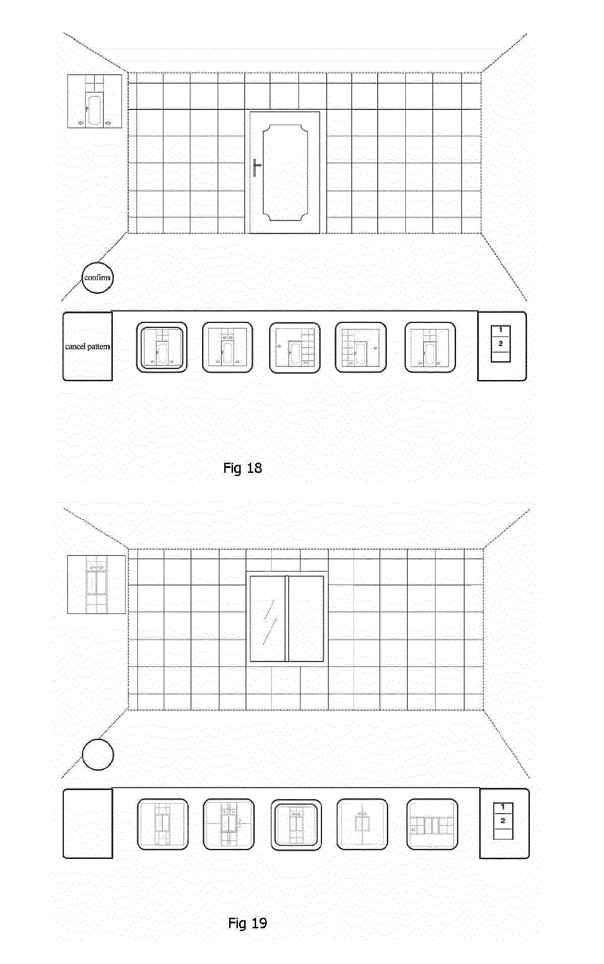

Referring to Figures 17, 18 and 19, in this method, the computer description language and formulas of functions in the system are called, and by calculation, paving manners of tiles or marbles around selected mosaic tiles, door or windows are adjusted, that is, paving positions of tiles around the selected mosaic tiles, doors or windows are re-adjusted, then a calculation result is transformed into an image of paved tiles with the position re-adjusted, and the image is presented in the region.

Wherein, pavement modeling patterns may be divided into 10 types, and the user may freely select a pavement modeling pattern to pave and present according to his actual needs.

Further, in the methods provided by the present invention, preferably, selection results are recorded in the tiles options, and a consumption amount and cost list of each type of tiles is generated on the interface. The selection results by the user for each region may be recorded in the tiles option by the software. Meanwhile, the consumption amount of each type of tiles may also be calculated, and the cost list is provided according to market prices that have been input to the system. In other words, through the method, the user may achieve his desired tiles pavement effect, and in addition to that, he may estimate the cost of his favorite pavement scheme of tiles, killing two birds with one stone, so to speak.

The method for automatically presenting a pavement scheme of decoration piles or marbles effectively solves the bottleneck problem encountered by the conventional CAD software and 3Dmax software in the sales industry, by presenting a tiles pavement effect in various manners in a 3D scene of a region to be paved, allowing the consumers and owners to view the piles pavement effect intuitively, which is fast and convenient, and brings about excellent vision experience for the consumers and owners, therefore it has a significant promotion value.

Although the embodiments of the present invention have been disclosed as above, they are not limited merely to those set forth in the description and the embodiments, and they may be applied to various fields suitable for the present invention. For those skilled in the art, other modifications may be easily modified realized without departing from the general concept defined by the claims and their equivalents, and the present invention does not limit to the particular details and drawings illustrated and described herein.

## Claims

1. A method for automatically presenting a pavement scheme of decoration piles or marbles, **characterized in that**, the method comprises:
step 1), recording tiles, pictures of marbles, mosaic modelings, patterns of cross banding line frames, patterns of modeling tiles of each brand into a database of the brand in a QEYJ software according to a QEYJ rule;
step 2), transforming all kinds of designs of tiles or marbles and pavement manners into computer description language and formulas of functions;
step 3), in a 3D stereo scene, by calling the computer description language and formulas of functions, re-transforming various tiles, pictures of marbles, mosaic modelings, patterns of cross banding line frames, patterns of modeling tiles by calculation, to present them in the 3D scene of a region to be paved; and
step 4), by recording and transmitting, the pavement pattern produced in the 3D stereo scene may be calculated, transformed, and re-presented in other scenes.

2. The method for automatically presenting a pavement scheme of decoration piles or marbles of claim 1, **characterized in that**, the computer description language and formulas of functions in the system are called, and by calculation, tiles or marbles in a selected region are chamfered, then a calculation result is transformed into an image of the chamfered tiles or marbles, and the image is presented in the region.

3. The method for automatically presenting a pavement scheme of decoration piles or marbles of claim 2, **characterized in that**, the computer description language and formulas of functions in the system are called, and by calculation, tiles or marbles in a selected region are grooved, that is, a groove structure is formed at a predetermined position of each tile or marble, then a calculation result is transformed into an image of the grooved tiles or marbles, and the image is presented in the region, wherein, the predetermined position of each tile or marble is selected in a selection module for grooving manners, comprising a unilateral grooving option, a bilateral grooving option and an equal divisional grooving option.

4. The method for automatically presenting a pavement scheme of decoration piles or marbles of claim 3, **characterized in that**, the computer description language and formulas of functions in the system are called, and by calculation, cross banding line frames are added into a selected region, that is, cross banding lines are added in combination at a predetermined position in the selected region, then a calculation result is transformed into an image of combination of cross banding line frames, and the image is presented in the region, wherein, the combination of cross banding line frames is selected in a selection module for cross banding line frames, comprising a plurality of options of a first pattern, a second pattern, a third pattern and a fourth pattern.

5. The method for automatically presenting a pavement scheme of decoration piles or marbles of claim 4, **characterized in that**, the computer description language and formulas of functions in the system are called, and by calculation, mosaic tiles are added into a selected region, that is, tiles or marbles are added in mosaic forms at a predetermined position in the selected region, then a calculation result is transformed into an image of combination of a mosaic, and the image is presented in the region, wherein, the mosaic pattern is selected in a selection module for mosaic patterns, and each exploded figure in a mosaic pattern may be selected and replaced by a user operating tiles or marbles options.

6. The method for automatically presenting a pavement scheme of decoration piles or marbles of claim 5, **characterized in that**, the computer description language and formulas of functions in the system are called, and by calculation, boundary lines are added into a selected region, that is, tiles are added around a position of a wall body in the selected region, then a calculation result is transformed into an image of tiles or marbles added in the region as boundary lines, and the image is presented in the region, wherein, number of the boundary lines may be one, two, three or more, and each boundary line is paved around the position of the wall body or a sanitary appliance and then displayed in the region.

7. The method for automatically presenting a pavement scheme of decoration piles or marbles of claim 6, **characterized in that**, the computer description language and formulas of functions in the system are called, and by calculation, tiles joints between tiles or between marbles in a selected region are performed with joint process, the joint process comprises: selection for a color in a selection module for joint colors, and selection for a width in a selection module for joint widths, then a calculation result is transformed into an image of tiles or marbles with changes in joints, and the image is presented in the region.

8. The method for automatically presenting a pavement scheme of decoration piles or marbles of claim 7, **characterized in that**, the computer description language and formulas of functions in the system are called, and by calculation, tiles or marbles in a selected region are paved by rolling, comprising: at least two texture rotation angles for a type of tiles or marbles are selected from tiles options, then a calculation result is transformed into an image of combination of tiles or marbles, and the image is presented in the region.

9. The method for automatically presenting a pavement scheme of decoration piles or marbles of claim 8, **characterized in that**, the computer description language and formulas of functions in the system are called, and by calculation, tiles or marbles in a selected region are paved in combination, comprising: at least two tiles are selected simultaneously from tiles or marbles options, then a calculation result is transformed into an image of combination of tiles or marbles, and the image is presented in the region, wherein, a predetermined pavement rule is selected by a user in a selection module for pavement of combined tiles.

10. The method for automatically presenting a pavement scheme of decoration piles or marbles of claim 9, **characterized in that**, the computer description language and formulas of functions in the system are called, and by calculation, tiles or marbles in a selected region are paved as modeling tiles, that is, the tiles are added at a predetermined position in the selected region in a form of modeling tiles, then a calculation result is transformed into an image of modeling tiles, and the image is presented in the region, wherein, the modeling tiles are selected in a selection module for modeling tiles. There are many types of modeling patterns in the selection module for modeling tiles, and each exploded figure in a modeling tile may be selected and replaced by a user operating tiles or marbles options, and a size, number of a modeling tile may also be performed with an equal division operation.

11. The method for automatically presenting a pavement scheme of decoration piles or marbles of claim 10, **characterized in that**, the computer description language and formulas of functions in the system are called, and by calculation, a user performs a region separating operation in a selected region, and the system will record information on the separation, and for each separated region, allow a user to select in tiles or marbles options in the combined tiles pavement module or in the modeling tiles pavement module, and presents the selection by a user in the separated region of the pattern.

12. The method for automatically presenting a pavement scheme of decoration piles or marbles of claim 11, **characterized in that**, the computer description language and formulas of functions in the system are called, and by calculation, a selected 3D model is paved with modeling tiles, that is, tiles are added at a predetermined position in the selected region in a form of modeling tiles, then a calculation result is transformed into an image of modeling tiles on the selected model, and the image is presented on the model, wherein, the modeling tiles are selected in a selection module for modeling tiles, and each exploded figure in a modeling tile may be selected and replaced by a user operating tiles or marbles options.

13. The method for automatically presenting a pavement scheme of decoration piles or marbles of claim 12, **characterized in that**, the computer description language and formulas of functions in the system are called, and by calculation, paving manners of tiles or marbles around selected mosaic tiles, door or windows are adjusted, that is, paving positions of tiles around the selected mosaic tiles, doors or windows are re-adjusted, then a calculation result is transformed into an image of paved tiles with the position re-adjusted, and the image is presented in the region, wherein, pavement modeling patterns may be divided into 10 types, and a user may freely select a pavement modeling pattern to pave and present according to his actual needs.

14. The method for automatically presenting a pavement scheme of decoration piles or marbles of claim 13, **characterized in that**, selection results are recorded in the tiles options by a user, and a consumption amount and cost list of each type of tiles is generated on the interface, and by transmitting, the list is transformed, calculated and re-presented in other scenes.
